# EUROPEAN PATENT APPLICATION

(11) **EP 1 479 937 A2**
(43) Date of publication of application: **24.11.2004**
(21) Application number: 04252148.4
(22) Date of filing: 13.04.2004
(51) Int. Cl.: F16F 7/10

(54) **An engine exhaust damping device**

(30) Priority: 17.05.2003 GB 0311386
(71) Applicant: Arvin International (UK) Limited, Preston, PR4 1TR (GB)
(72) Inventor: Burge, Neil, Lythem, St.Annes, FY8 3LN (GB)
(74) Representative: Croston, David

(57) **Abstract**

An engine exhaust damping device 16 comprises a damper 22, a sensor 18 and a control unit 20. The damper 22 comprises a stepper motor 26 arranged to drive an eccentric mass 28 reciprocally against end stops 30, 32. The sensor 18 comprises a ball-in-tube arrangement 36, 38 and is coupled to the exhaust. The control unit 20 receives sensor data and controls the stepper motor 26 to drive the mass 28 out of phase with the sensed vibrations.

## Description

The present invention relates to an engine exhaust damping device and particularly to, although not exclusively limited to, a vehicle engine exhaust damping device.

Damping systems for exhaust vibrations are known and generally comprise masses mounted in a resilient fashion to the body of the exhaust whereby the mass and resilient mounting is selected to effect damping at a resonate frequency of the exhaust system. It is also known to dampen noise emissions in exhausts by using "anti-sound" produced by loudspeakers.

British patent application No. 2228778 discloses a damping system in a motor vehicle engine mounting. In that arrangement, the mounting comprises an elastic rubber spring member arranged in parallel with an actuator coupled to a seismic mass. In that system, the load is supported by the elastic spring member and high frequency vibrations are deadened by the actuator which acts to change the length between the seismic mass and the supported load. That arrangement is only effective against high frequency vibrations and must be configured as part of the engine mounting. That arrangement cannot be located anywhere other than the engine mounting. The system only functions if the weight of the vibrating load is taken up by the rubber spring member so that a relatively low force is required to displace the supported load.

It is an object of the invention to provide an improved engine exhaust damping device.

According to the invention there is provided an engine exhaust damping device comprising a damper, a sensor and control means, the damper comprising a mass and drive means for driving the mass, the sensor comprising means for sensing a momentary component of movement of the vibration to be damped and the control means being arranged to receive the sensed data and to control the drive means so that the drive means drives the mass to generate an impulse to damp the vibration.

In that way, by using a mass driven to generate an impulse, the vibration force is directly damped.

In one embodiment, the mass is driven to provide an impulse acting in one direction only, the control means controlling the drive means to effect driving of the mass to generate the impulse at a time appropriate to effect damping. Thus, the sensor senses the movement of the vibrating body and determines the best time for the impulse to be input into the exhaust system.

Alternatively, the mass can be driven in oscillatory fashion so as to provide impulses acting in two, substantially opposite directions, the control means controlling the drive means to effect driving of the mass at substantially the same frequency of the vibration to be damped and out of phase with the vibration to be damped so as to effect damping thereof. In such a case, the mass may be driven 150-210 degrees out of phase with the vibration to be damped, most preferably 180 degrees out of phase. In such a case, the mass may be driven in a sinusoidal oscillation.

The sensor may be arranged only to sense movement in one dimension. Alternatively two sensors can be provided and arranged transverse to each other to sense movement in two dimensions. Where movement in two dimensions is sensed, two dampers may be provided and arranged to damp components of vibration acting transverse to each other. In that way, vibration occurring in two dimensions can be damped by the present system.

The sensor preferably comprises a member arranged moveably on a path, the path having switching means actuable by the member whereby vibration applied to the path tends to move the member relative to the path which actuates the switch to indicate the momentary component of movement of the vibration. In one preferred form, the sensor comprises a ball in a tube with the ball rolling relative to the tube so as to actuate the switch.

The sensor may include means to retard the member as it approaches the switching means, for example provision of an inclined approach to the switching means or altering the frictional characteristics of the path as it approaches the switching means, for example by provision of a rougher surface or crenellations.

The switching means preferably comprises a contact at each end of the path which enables the momentary component of movement to be determined in two opposite directions. The switching means preferably comprises a plurality of contacts arranged towards each end of the path and the contacts of each plurality are spaced apart from one another so that the sensor can detect the amplitude of vibration depending upon which of the contacts the member actuates.

In a preferred embodiment the mass can be changed to allow tuning of the damper to the exhaust on which it is to be arranged.

Where the device is arranged on an exhaust, the exhaust may be mounted to a reference body, for example a vehicle body, at a mounting point and there is preferably no operative connection between the damper and the reference body. The damping device is preferably arranged on the exhaust remote from the exhaust mounting point. In the most preferred embodiment the damping device is arranged at the point at which the amplitude of vibration is greatest. In that way, the sensitivity of the device is increased, as is the damping effectiveness.

An engine exhaust damping device will now be described in detailed by way of example and with reference to the accompanying drawings, in which:-
Fig.1 is a plan view of part of an exhaust for an internal combustion engine with a damping device in accordance with the invention arranged thereon,
Fig.2 is a schematic sectional view of Fig.1 taken on line II-II and shown to a larger scale,
Fig.3 is a schematic illustration of a sensor for use in an engine exhaust damping device in accordance with the invention,
Fig.4 is a schematic illustration of an alternative sensor design,
Fig.5 is a schematic illustration of a further alternative sensor design, and
Fig.6 and 7 are graphs which show the vibration of the exhaust, the corresponding vibration of the sensor, the sensor switch response and the damping device response.

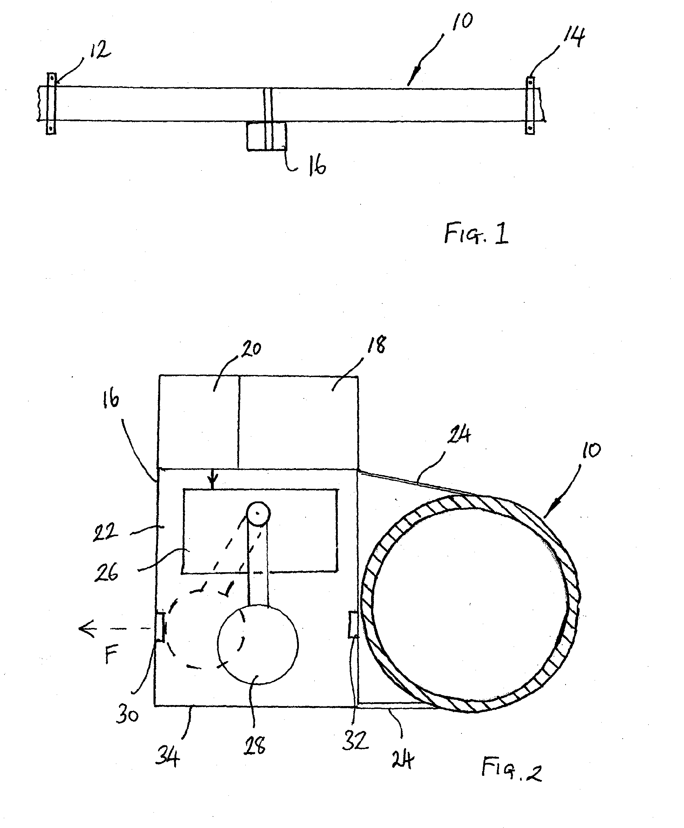

In Fig. 1 an exhaust pipe 10 of an internal combustion engine (not shown) is carried by mountings 12, 14. During operation of the engine, particularly where the engine is a vehicle engine, the exhaust is subjected to a variety of forces which cause vibrations in the exhaust 10, leading to increased noise and wear of the exhaust pipe. It is preferred if, firstly, the forces on the exhaust are minimised and, secondly, that vibrations of the exhaust 10 are damped so as to reduce excess noise and wear and tear.

The damping device 16 according to the present invention is arranged on the exhaust pipe 10, most preferably spaced from the mountings 12, 14.

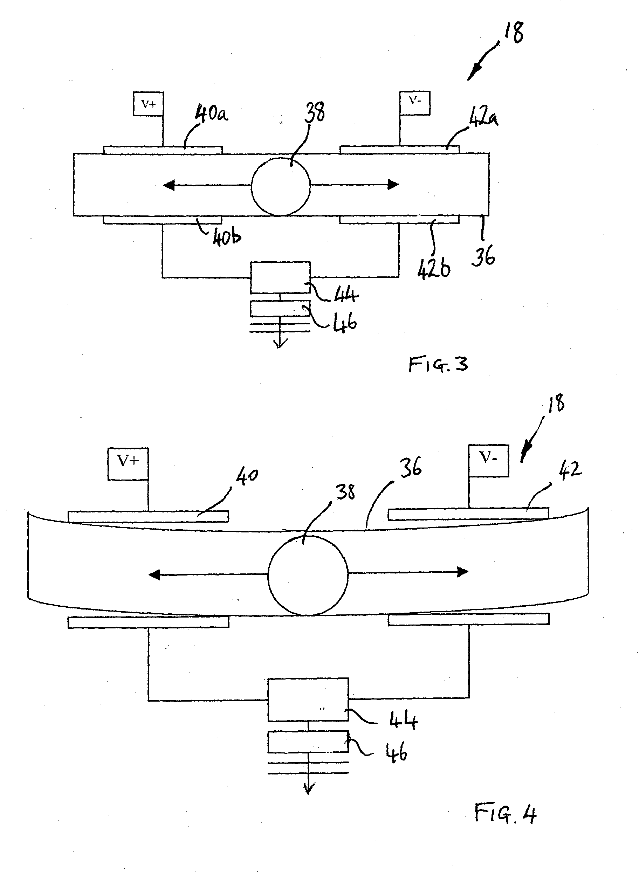

The damping device 16 is shown in more detail in Fig.2 and comprises a sensor 18, control unit 20 and an eccentric mass active damping assembly 22.

Various configurations of the sensor 18 as shown in Figs.3-5 will be described in more detail below.

The damping device 16 is secured in a substantially rigid fashion to the pipe 10 by means of a metallic strap 24.

The eccentric mass' damping assembly 22 comprises a stepper motor 26 which is arranged to drive an eccentric mass 28 reciprocally against end stops 30, 32 arranged inside a housing 34 of the damping device 16.

Turning to Fig.3, one version of the sensor 18 is shown. The sensor 18 comprises a tube 36 with a ball 38 arranged therein. The ball 38 is arranged in such a way that it can roll freely along the tube 36. At each end of the tube 36, there are a pair of spaced contact plates 40a, b, 42a, b. Each pair of contacts 40a, b, 42a, b, is effectively a switch in a respective circuit. The contacts 40a, b comprise a switch to which a positive electrical potential is applied whilst the contacts 42a, b comprises a switch in a circuit to which a negative electrical potential is supplied. Each circuit is substantially identical, save for the plurality of voltage applied and, when the circuit is completed, generates a signal via signal generator 44 which is indicative of the electrical polarity applied to the contact plates 40, 42, thus indicating which contact plates has been short circuited. A signal is passed through a resistor 46 to a control unit 20.

The dimensions of the ball 38 and the spacings of the contact plates 40a, 40b, 42a, 42b are carefully selected so as to ensure that the ball, which is made of conductive material, contacts both of the plates 40a and 40b or 42a and 42b, but with sufficient room for the ball to move unimpeded. Ideally, the distance between the contacts 40a, b, 42a, b should be substantially similar to the external diameter of the ball 38, although some allowance can be made. If the ball diameter is substantially smaller than the distance between the contact plates then effective electrical bridging contact will not occur. If the diameter of the ball is substantially larger than the distance between the contact then the ball may become stuck or it may simply not move down a tube to the end in order to effect the contact.

In Fig.4 an alternative design of sensor is shown which is substantially similar to the design of the Fig.3 sensor and parts corresponding to parts in Fig.3 bear the same reference numerals. In the Fig.4 design the ball-in-tube sensor is substantially similar to that shown in Fig.3 with the exception that the tube 36 is curved (upwardly in Fig.4) towards each end thereof adjacent the contact plates 40, 42. The inclination of the tube at opposite ends has a biasing effect on the movement of the ball 38. Of course the tube 36 can be inverted from the arrangement shown in Fig.4 so that the ends of the tube bend downwardly (not shown).

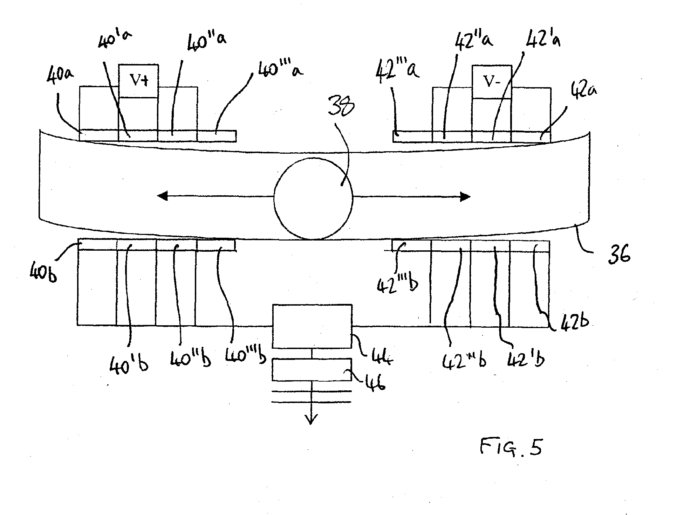

A yet further embodiment of the sensor is shown in Fig.5 and again the sensor 18 in Fig.5 corresponds substantially to the sensor shown in Figs.3 and 4 and parts corresponding to parts in Figs.3 and 4 carry the same reference numbers.

The sensor 18 in Fig.5 has a curved tube 36 rather like that shown in Fig.4 but multiple pairs of contact plates 40a,b, 40'a,b, 40"a,b and 40"'a,b and 42a,b, 42'a,b, 42"a,b, 42"'a,b, are provided at respective opposite ends of the tube. As the ball 38 moves along the tube 36 towards one end thereof, it causes electrical connection to be made between the "a" plates and the "b" plates of respective successive pairs of contacts. For example, looking at Fig.5, as the ball 38 moves to the left as viewed in Fig.5, the ball will progressively create contacts between the 40"' contact pair, then the 40" contact pair, then the 40' contact pair and then finally the 40 contact pair. That provides an indication of the displacement of the ball in addition to its direction of movement.

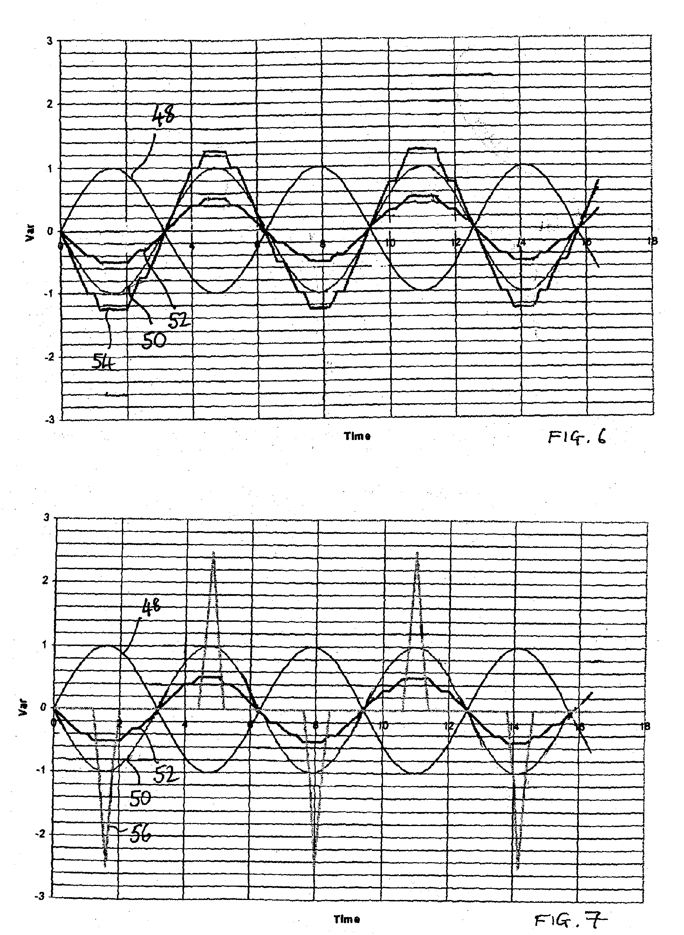

In use, the exhaust damping device 16 is strapped to an exhaust pipe 10 which is itself connected to an external combustion engine of, for example, a vehicle. During operation of the engine the exhaust will vibrate as a consequence of the engine vibration, vehicle motion, airflow around the exhaust and gas flow through the exhaust. The damping device 16 is arranged spaced from the exhaust mounts 12, 14. The intention of that positioning is that the vibration of the exhaust will have its greatest amplitude spaced from the mounting points and so the sensor 18 of the damping device 16 will pick up more vibrations at that position than closer to the exhaust mounting. The sensor 18 is rigidly attached to the exhaust by means of the strap 24 so that any vibrations encountered by the exhaust are transmitted to the sensor 18. Turning to Figs.3-5, the sensors 18 from those figures are arranged so that the tube 36 lies substantially horizontally in order to prevent the ball from rolling towards one end of the tube or the other under the simple action of gravity. As the exhaust vibrates, the tube 36 moves with the exhaust. Because the ball 38 has a relatively high inertial mass compared with the frictional force holding the ball in position in the tube, movement of the tube in space will cause relative movement of the ball 38 along the tube 36 in the opposite direction to the movement of the tube. Consequently, movement of the exhaust results in a corresponding movement of the ball along the tube in the opposite direction to the movement of the exhaust if the tube is taken as the frame of reference. Movement of the exhaust having sufficient amplitude will cause the ball 38 to move into contact with the contact plates 40a, 40b or 42a, 42b at one of the ends of the tube. That contact creates a signal indicative of the end of the tube which the ball has contacted, generated in signal generator 44 and the signal is transmitted via a resistor 46 to a control unit 20 which includes a microprocessor. On receipt of such a signal, the microprocessor 20 sends a control signal to the stepper motor 26 which drives the eccentric mass 28 reciprocally against end stops 30, 32. Under most conditions, the movement of the exhaust will be oscillatory which will, in turn, result in an oscillatory movement of the ball 38 in the tube, resulting in alternate positive and negative signals being generated by the signal generator 44. In turn, the microprocessor control 20 will drive the stepper motor 26 in an oscillatory fashion. The stepper motor is intended to drive the mass against the end stops 30, 32 and, in doing so, when the mass 28 strikes one of the end stops 30, 32 an impulsive force is generated generally in the direction of travel of the mass 28. The mass is driven in phase of the movement of the ball 38 which, in view of the arrangement of the ball in tube sensor on the exhaust, is 180 degrees out of phase with the movement of the exhaust pipe 10. An example of the movement of the exhaust, the ball and the driving of the mass is shown in Fig.6. In that figure a graph is shown illustrating the movement of various parts over time. The first sinusoidal track, marked 48, illustrates the movement of the exhaust pipe 10 while the second sinusoidal track 50 represents the movement of the ball 38 in the tube 36. That results in an electrical signal generated by the signal generator 44 shown by virtue of the line 52 in Fig.6. The control unit 20 then causes the stepper motor 26 to drive the mass 28 reciprocally and the motion of the mass 28 is represented by the line 54 in Fig.6. By providing such motion, the forces generated by the mass 28 moving out of phase with the vibrating exhaust 10 tends to damp the movement of the exhaust 10. In particular, the forces generated by the moving mass 28 striking ends 30, 32 are acting out of phase with the forces driving the exhaust pipe 10. That, in turn, reduces the overall net force in the system which thus reduces the vibrations of the exhaust 10.

In another embodiment, the mass 28 is driven rather more impulsively than the sinusoidal driving of the mass illustrated in Fig.6. In that embodiment, illustrated in Fig.7 it can be seen that the exhaust 10 is vibrating as in Fig.6 (as illustrated by the line 48), as is the ball 38 in tube 36 (as illustrated by the line 50). Again, a similar signal pattern is illustrated in Fig.7 (as shown by the line 52) but the mass is driven impulsively so as to create a substantial force acting opposite to the force driving the exhaust. The line 56 illustrates the driving of the mass 28 by the stepper motor 26. Although the force generated by such driving of the mass is "spiky" there is still a substantial damping effect created by the input of force in this way. The force is input out of phase with the forces causing the vibration. In both of the systems shown in Fig.6 and Fig.7, the intention is to remove energy from the vibrating system which is done by countering the forces creating the vibration directly with force acting in the opposite direction.

The advantage of the present invention is that the damping force generated by movement of the mass by the stepper motor 26 is targeted directly at the movement of the exhaust throughout the frequency range of vibrations that the exhaust is subjected to.

## Claims

1. An engine exhaust damping device (16) comprising a damper (22), a sensor (18) and control means (20), the damper comprising a mass (28) and drive means (26) for driving the mass, the sensor comprising means for sensing a momentary component of movement of the vibration to be damped and the control means being arranged to receive the sensed data and to control the drive means so that the drive means drives the mass to generate an impulse to damp the vibration.

2. An exhaust damping device according to claim 1 in which the mass is driven to provide an impulse acting in one direction only, the control means controlling the drive means to effect driving of the mass to generate the impulse at a time appropriate to effect damping.

3. An exhaust damping device according to claim 1 in which the mass is driven in oscillatory fashion so as to provide impulses acting in two, substantially opposite directions, the control means controlling the drive means to effect driving of the mass at substantially the same frequency as the vibration to be damped and out of phase with the vibration to be damped so as to effect damping thereof.

4. An exhaust damping device according to claim 3 in which the mass is driven 150 to 210 degrees out of phase with the vibration to be damped, most preferably 180 degrees out of phase.

5. An exhaust damping device according to any preceding claim in which the mass is driven in a sinusoidal oscillation.

6. An exhaust damping device according to any preceding claim in which the sensor can only sense movement in one dimension.

7. An exhaust damping device according to claim 6 in which two sensors are provided and are arranged transverse to each other.

8. An exhaust damping device according to claims 1 to 5 in which the sensor senses two transverse momentary components of movement.

9. An exhaust damping device according to any one of claims 1 to 5, 7 or 8 in which two dampers are provided and are arranged to damp components of the vibrations acting transverse to each other.

10. An exhaust damping device according to any preceding claim in which the sensor comprises a member (38) arranged movably on a path (36), the path having switching means (40, 42) actuable by the member whereby vibration applied to the path tends to move the member relative to the path which actuates the switching means to indicate the momentary component of movement of the vibration.

11. An exhaust damping device according to claim 10 in which the sensor includes means to retard the member as it approaches the switching means.

12. An exhaust damping device according to claim 10 or 11 in which the switching means comprises a contact at each end of the path.

13. An exhaust damping device according to claim 12 in which the switching means comprises a plurality of contacts (40a, b, 40^{I}a, b, 40^{II}a,b, 40^{III}a, b, 42a, b, 42^{I}a, b, 42^{II}a, b, 42^{III}a, b) towards each end of the path, the contacts of each plurality being spaced apart from one another so as to enable the sensor to detect amplitude of vibration.

14. An exhaust damping device according to any preceding claim in which the mass can be changed to allow tuning of the damper to the exhaust on which it is to be arranged.

15. An exhaust damping device according to any preceding claim in which the device is arranged on an exhaust (10) of an engine and in which the exhaust is mounted to a reference body at a mounting point and there is no operative connection between the damper and the reference body.

16. An exhaust damping device according to claim 15 in which the damping device is arranged on the exhaust remote from the exhaust mounting point (12, 14).
